# FASCICULE DE BREVET EUROPEEN

(11) **EP 4 421 329 B1**
(45) Date de publication et mention de la délivrance du brevet: **10.06.2026**
(21) Numéro de dépôt: 24153752.1
(22) Date de dépôt: 24.01.2024
(51) Int. Cl.: F16B 5/08, B23K 1/00, F16B 11/00, B62D 27/02, C09J 5/00, B23K 11/11, B32B 3/26, C09J 5/06, B29C 65/48, B32B 7/08, B32B 7/12, B32B 7/14, B32B 15/08, B23K 103/16

(54) **ASSEMBLAGE DE TÔLES PAR COLLAGE POUR UN VÉHICULE AUTOMOBILE**
VERBINDUNG VON BLECH DURCH KLEBEN FÜR EIN KRAFTFAHRZEUG
ADHESIVELY BONDED SHEET METAL ASSEMBLY FOR A MOTOR VEHICLE

(30) Priorité: 27.02.2023 FR 2301772
(43) Date de publication de la demande: 28.08.2024
(73) Titulaire: Stellantis Auto SAS, 78300 Poissy (FR)
(72) Inventeur: MAGNAUD, FLORIAN, 78570 CHANTELOUP LES VIGNES (FR); MARQUES, GABRIEL, 91220 BRETIGNY SUR ORGE (FR)
(74) Mandataire: BCIP

(56) Documents cités:
- JP-A- 2013 013 910
- JP-A- 2013 126 679
- US-B1- 6 221 507

## Description

### Domaine technique

La présente invention concerne le domaine des véhicules automobiles, plus particulièrement le domaine de la structure des véhicules automobiles.

### Technique antérieure

Les véhicules automobiles actuels comportent davantage des empilements de plusieurs tôles, notamment d'au moins trois tôles, au niveau de leur structure, afin de garantir des zones rigides d'absorption de chocs et/ou de répartition de contraintes.

A cet égard, ces empilements nécessitent un collage et/ou un assemblage par soudage afin de les rigidifier pour mieux répartir les contraintes.

Toutefois, afin d'assurer une raideur suffisante des assemblages de tôles, une quantité importante de colle est généralement utilisée, ce qui rend les solutions conventionnelles peu économiques.

Le document de brevet publié US 6 221 507 A1 divulgue un assemblage de cinq panneaux structuraux par brasage comprenant un panneau central destiné à fondre sous haute température de manière à remplir des perforations sur les des panneaux adjacents et ainsi assurer une fixation des cinq panneaux.

Cependant, la solution présentée par le document nécessite aux panneaux structuraux d'être soumis à des températures relativement élevées (allant jusqu'à 620°C), ce qui complexifie le procédé de fabrication, la solution n'est donc pas adaptée à une application automobile.

Le document JP2013-126679 décrit un assemblage de trois tôles comprenant une première tôle sur laquelle est disposée une couche de colle, une tôle intermédiaire munies de trous traversants oblongs et une troisième tôle comportant une succession de surfaces plates et en saillie, les surfaces en saillie venant au droit des trous traversant oblongs de la tôle intermédiaire et sont reliées par une gouttière formée par un embouti de la tôle. Celle solution nécessite une grande quantité de colle et plusieurs opérations d'emboutissage.

### Exposé de l'invention

La présente invention a pour objectif de pallier au moins un des inconvénients de l'état de la technique susmentionné. Plus particulièrement, l'invention a pour objectif de proposer une solution permettant d'assembler au moins trois tôles de manière économique et rapide, tout en améliorant la raideur de l'assemblage.

À cet effet, l'invention a pour objet un assemblage de tôles, notamment pour un véhicule automobile, selon la revendication 1 et comprenant :
- une première tôle ;
- une deuxième tôle superposée à la première tôle ;
- une tôle intermédiaire disposée entre la première tôle et la deuxième tôle ;
- de la colle entre la première tôle et la tôle intermédiaire ;
où la tôle intermédiaire comprend des poinçonnages traversés par la colle s'étendant entre ladite tôle intermédiaire et la deuxième tôle, de manière à assurer avec ladite colle une liaison entre ladite tôle intermédiaire et chacune desdites première et deuxième tôles, et remarquable en ce que la deuxième tôle est adaptée de manière à contacter et étendre la colle évacuée par les poinçonnages.

Selon un mode de réalisation, l'assemblage comprenant, en outre, au moins un point de soudure par résistance électrique assurant une liaison métallurgique entre la tôle intermédiaire et chacune des première et deuxième tôles.

Selon un mode de réalisation, la colle correspond à un seul cordon de colle s'étendant longitudinalement sur la première tôle, ledit cordon étant aligné avec les poinçonnages de tôle intermédiaire.

Selon un mode de réalisation, la colle comprend un volume total d'au plus 3 cm³.

Selon un mode de réalisation, les poinçonnages sont longitudinalement alignés

Selon un mode de réalisation, les poinçonnages s'étendent sur au moins 80% d'une étendue longitudinale totale des tôles.

Selon un mode de réalisation, la tôle intermédiaire comprend entre 5 et 40 poinçonnages.

L'invention concerne également un véhicule automobile comprenant un assemblage de tôles, remarquable en ce que ledit assemblage est selon l'invention.

L'invention a également trait à un procédé d'assemblage de tôles selon l'invention, ledit procédé comprenant, selon la revendication 9, les étapes suivantes :
- application d'un cordon de colle sur la première tôle ;
- mise en contact de la tôle intermédiaire sur la première tôle, avec un alignement des poinçonnages et du cordon de colle ;
- mise en appui de la tôle intermédiaire contre la première tôle jusqu'à une évacuation de la colle depuis les poinçonnages ;
- positionnement de la deuxième tôle sur la tôle intermédiaire de manière à contacter et étendre la colle évacuée par les poinçonnages.

Selon un mode de réalisation, le procédé comprenant, en outre, l'étape suivante :
- soudage de l'assemblage de tôles au moyen d'au moins un point de soudure par résistance électrique à une de deux extrémités de l'assemblage de tôles suivant une étendue longitudinale dudit assemblage, de manière à assurer une liaison métallurgique.

Les mesures de l'invention sont avantageuses en ce que la tôle intermédiaire comprenant des poinçonnages permet l'utilisation d'un seul cordon de colle, car les poinçonnages permettent de répandre la colle depuis la première tôle vers la deuxième tôle, et ainsi optimiser la quantité de colle utilisée, tout en assurant une rigidification et une raideur maximales de l'assemblage, sans engendrer des coûts supplémentaires.

De plus, l'assemblage de l'invention assure un gain de masse significatif grâce aux poinçonnages de la tôle intermédiaire.

### Brève description des dessins

[Fig 1] illustre schématiquement une vue latérale d'un assemblage de tôles selon l'invention, dans lequel un seul cordon de colle est appliqué à une première tôle ;
[Fig 2] représente une vue de face d'une tôle intermédiaire disposée entre la première tôle et une deuxième tôle appartenant à l'assemblage de la figure 1 ;
[Fig 3] illustre une vue latérale de l'assemblage de tôles selon l'invention, dans lequel la colle est évacuée par des poinçonnages de la tôle intermédiaire ;
[Fig 4] illustre une vue latérale de l'assemblage de tôles selon l'invention, dans lequel la deuxième tôle est positionnée sur la tôle intermédiaire.

### Description détaillée

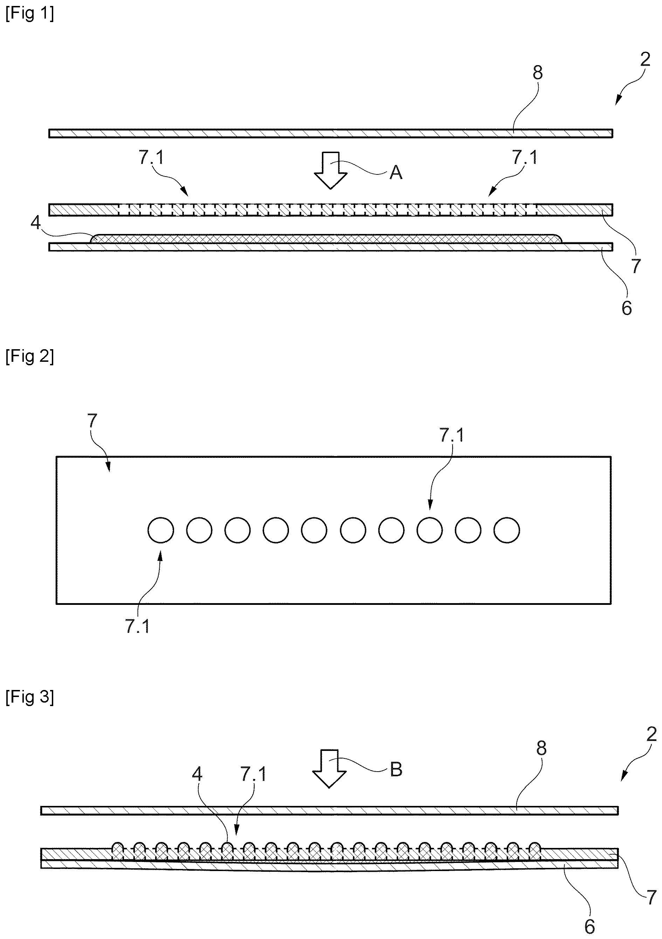

La figure 1 illustre schématiquement une vue latérale d'un assemblage de tôles 2 selon l'invention, dans lequel un seul cordon de colle 4 est appliqué à une première tôle 6.

En effet, l'assemblage 2 comprend la première tôle 6, une deuxième tôle 8 superposée à ladite première tôle 6, ainsi qu'une tôle intermédiaire 7 disposée entre la première tôle 6 et la deuxième tôle 8.

L'invention propose un procédé d'assemblage de tôles comprenant une première étape d'application d'un cordon de colle 4 sur la première tôle 6, suivie par une étape de mise en contact et d'appui de la tôle intermédiaire 7 sur la première tôle 6, au moyen d'un effort d'appui A.

Avantageusement, l'assemblage 2 comprend un seul cordon de colle 4, grâce à la présence d'une pluralité de poinçonnages 7.1 traversant toute une épaisseur de la tôle intermédiaire 7.

En effet, la mise en contact de la tôle intermédiaire 7 sur la première tôle 6 comprend un alignement des poinçonnages 7.1 avec le cordon de colle 4. Dans l'invention la colle 4 est apte à traverser toute l'épaisseur de la tôle intermédiaire 7 pour atteindre la deuxième tôle 8 et ainsi assurer une adhésion de l'ensemble des trois tôles 6, 7 et 8.

Les poinçonnages 7.1 sont visibles à la figure 2 qui représente une vue de face de la tôle intermédiaire 7. Préférentiellement, cette dernière comprend une forme sensiblement rectangulaire, mais ladite tôle 7 ne se limite pas une telle forme. En effet, l'assemblage 2 de l'invention peut être disposé dans divers endroits du véhicule automobile, ainsi les différentes tôles peuvent avoir des formes autres que rectangulaires, par exemple, elles peuvent être sensiblement circulaires, ou triangulaires, etc.

De préférence, la tôle intermédiaire 7 comprend entre 2 et 100 poinçonnages 7.1, et plus préférentiellement entre 5 et 40 poinçonnages 7.1. Ces derniers correspondent à des trous cylindriques ayant un diamètre compris entre 4 et 10 mm, et étant préférentiellement de 8 mm. Chacun des poinçonnages 7.1 et espacé l'un de l'autre d'environ 12 mm (le terme « environ » signifie ici ± 10 mm).

On peut voir à la figure 2 que les poinçonnages 7.1 sont longitudinalement alignés, toutefois, ces derniers peuvent être désalignés, ou peuvent former un profil pouvant être incliné d'un angle allant jusqu'à 20° par rapport à la direction longitudinale de l'étendue de la tôle intermédiaire 7.

Préférentiellement, les poinçonnages 7.1 s'étendent sur au moins 50% d'une étendue longitudinale totale de la tôle intermédiaire 7, et plus préférentiellement sur au moins 80% de ladite étendue.

De façon avantageuse, la tôle intermédiaire 7 est obtenue par emboutissage de tôle, et les poinçonnages 7.1 sont obtenus lors dudit emboutissage. A cet effet, l'assemblage 2 reste économique, au moins car la réalisation des poinçonnages 7.1 ne présente aucun coût supplémentaire.

La figure 3 illustre une vue latérale de l'assemblage de tôles 2. Il s'agit ici d'une autre étape ultérieure du procédé d'assemblage de tôles, dans laquelle la deuxième tôle 8 est positionnée pour une mise en contact, par un effort B, contre la tôle intermédiaire 7 suite à l'évacuation de la colle 4 depuis les poinçonnages 7.1.

Dans l'invention, la colle 4 est évacuée depuis les poinçonnages 7.1, ce qui permet d'avoir une quantité de colle suffisante à l'adhésion de la deuxième tôle 8 avec la tôle intermédiaire 7.

Préférentiellement, le cordon de colle 4 disposé sur la première tôle 6, est de type époxy ou polyuréthane, et comprend un volume total compris entre 1 et 5 cm³, et est plus préférentiellement inférieur ou égal à 3 cm³, et est encore plus préférentiellement égal à environ 2 cm³.

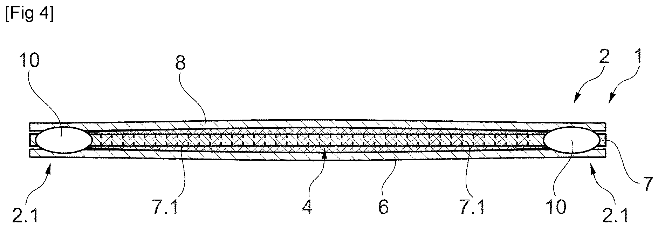

La figure 4 illustre une vue latérale de l'assemblage de tôles 2, à une étape finale du procédé de l'invention, dans laquelle la deuxième tôle 8 est positionnée sur la tôle intermédiaire 7.

On peut voir que la colle a été répandue entre chacune des trois tôles 6, 7 et 8, de manière à assurer un collage complet de l'ensemble.

Avantageusement, les poinçonnages 7.1 agissent comme un ancrage de la première tôle 6 à la deuxième tôle 8 augmentant davantage la rigidification de l'assemblage 2. En effet, la colle réticule et adhère solidement aux tôles, formant ainsi une série de protubérances s'étendant à travers les poinçonnages 7.1 et fixant solidement et fermement les tôles en position.

Des essais de flexion ont été réalisés sur l'assemblage 2, notamment en trois différents points de l'étendue de l'assemblage 2, de manière à mesurer la raideur. L'assemblage 2 comprenant un volume de 2 cm³ de colle 4, obtient une raideur de 42 N/mm, ce qui correspond à une amélioration d'environ 45% par rapport aux solutions conventionnelles nécessitant l'utilisation de deux cordons de colle 4, respectivement, à la première tôle et à une tôle intermédiaire dépourvue de poinçonnages. De plus, l'assemblage 2 présente un gain de masse considérable dû à la présence de poinçonnages 7.1.

Alternativement, l'assemblage peut comprendre plus de trois tôles, par exemple, cinq tôles (ou plus). A cet égard, l'assemblage comprendra une tôle intermédiaire dépourvue de trous, et des première et deuxième tôles ayant des poinçonnages permettant de répandre la colle, respectivement, vers une quatrième et une cinquième tôle.

Préférentiellement, l'assemblage 2 est finalisé par au moins un point de soudure 10 par résistance électrique assurant une liaison métallurgique entre la tôle intermédiaire 7 et chacune des première 6 et deuxième tôles 8. Plus préférentiellement, l'assemblage comprend un point de soudure 10 sur chacune de deux extrémités 2.1 de l'assemblage 2. Avantageusement, les points de soudure 10 permettent, conjointement avec la colle 4, de figer en géométrie et de garantir une rigidification répartie de manière optimisée dans l'assemblage 2, tout en permettant une raideur maximale de l'assemblage.

## Revendications

1. Assemblage de tôles (2), notamment pour un véhicule automobile, comprenant :
- une première tôle (6) ;
- une deuxième tôle (8) superposée à la première tôle (6) ;
- une tôle intermédiaire (7) disposée entre la première tôle (6) et la deuxième tôle (8) ;
- de la colle (4) entre la première tôle (6) et la tôle intermédiaire (7) ;
où la tôle intermédiaire (7) comprend des poinçonnages (7.1) traversés par la colle (4) s'étendant entre ladite tôle intermédiaire (7) et la deuxième tôle (8), de manière à assurer avec ladite colle (4) une liaison entre ladite tôle intermédiaire (7) et chacune desdites première (6) et deuxième tôles (8),
et **caractérisé en ce que** la deuxième tôle (8) est adaptée de manière à contacter et étendre la colle évacuée par les poinçonnages (7.1).

2. Assemblage de tôles (2) selon la revendication 1, comprenant, en outre, au moins un point de soudure (10) par résistance électrique assurant une liaison métallurgique entre la tôle intermédiaire (7) et chacune des première (6) et deuxième tôles (8).

3. Assemblage de tôles (2) selon l'une des revendications 1 et 2, dans lequel la colle (4) correspond à un seul cordon de colle (4) s'étendant longitudinalement sur la première tôle (6), ledit cordon (4) étant aligné avec les poinçonnages (7.1) de tôle intermédiaire (7).

4. Assemblage de tôles (2) selon l'une des revendications 1 à 3, dans lequel la colle (4) comprend un volume total d'au plus 3 cm³.

5. Assemblage de tôles (2) selon l'une des revendications 1 à 4, dans lequel les poinçonnages (7.1) sont longitudinalement alignés.

6. Assemblage de tôles (2) selon l'une des revendications 1 à 5, dans lequel les poinçonnages (7.1) s'étendent sur au moins 80% d'une étendue longitudinale totale des tôles.

7. Assemblage de tôles (2) selon l'une des revendications 1 à 6, dans lequel la tôle intermédiaire (7) comprend entre 5 et 40 poinçonnages (7.1).

8. Véhicule automobile (1) comprenant un assemblage de tôles (2), **caractérisé en ce que** ledit assemblage (2) est selon l'une des revendications 1 à 7.

9. Procédé d'assemblage de tôles (2) selon l'une des revendications 1 à 7, ledit procédé comprenant les étapes suivantes :
- application d'un cordon de colle (4) sur la première tôle (6) ;
- mise en contact de la tôle intermédiaire (7) sur la première tôle (6), avec un alignement des poinçonnages (7.1) et du cordon de colle (4) ;
- mise en appui de la tôle intermédiaire (7) contre la première tôle (6) jusqu'à une évacuation de la colle (4) depuis les poinçonnages (7.1) ;
- positionnement de la deuxième tôle (8) sur la tôle intermédiaire (7) de manière à contacter et étendre la colle (4) évacuée par les poinçonnages (7.1).

10. Procédé selon la revendication 9, comprenant, en outre, l'étape suivante :
- soudage de l'assemblage de tôles (2) au moyen d'au moins un point de soudure (10) par résistance électrique à une de deux extrémités (2.1) de l'assemblage de tôles (2) suivant une étendue longitudinale dudit assemblage (2), de manière à assurer une liaison métallurgique.

## Patentansprüche

1. Blechbaugruppe (2), insbesondere für ein Kraftfahrzeug, mit:
- ein erstes Blech (6);
- ein zweites Blech (8), das über dem ersten Blech (6) liegt;
- ein zwischen dem ersten Blech (6) und dem zweiten Blech (8) angeordnetes Zwischenblech (7);
- Kleber (4) zwischen dem ersten Blech (6) und dem Zwischenblech (7);
wobei das Zwischenblech (7) Stanzungen (7.1) umfasst, die von dem Klebstoff (4) durchsetzt sind und sich zwischen dem Zwischenblech (7) und dem zweiten Blech (8) erstrecken, um mit dem Klebstoff (4) eine Verbindung zwischen dem Zwischenblech (7) und jedem der ersten (6) und zweiten Bleche (8) zu gewährleisten,
und **dadurch gekennzeichnet, dass** das zweite Blech (8) so ausgebildet ist, dass es den durch die Stanzungen (7.1) abgeleiteten Klebstoff berührt und ausbreitet.

2. Blechanordnung (2) nach Anspruch 1, die ferner mindestens einen elektrischen Widerstandsschweißpunkt (10) aufweist, der eine metallurgische Verbindung zwischen dem Zwischenblech (7) und jedem des ersten (6) und zweiten Blechs (8) herstellt.

3. Blechanordnung (2) nach einem der Ansprüche 1 und 2, wobei der Klebstoff (4) einer einzigen Klebstoffschnur (4) entspricht, die sich in Längsrichtung über das erste Blech (6) erstreckt, wobei die Schnur (4) mit den Stanzungen (7.1) des Zwischenblechs (7) fluchtet.

4. Blechanordnung (2) nach einem der Ansprüche 1 bis 3, wobei der Klebstoff (4) ein Gesamtvolumen von höchstens 3 cm3 aufweist.

5. Blechanordnung (2) nach einem der Ansprüche 1 bis 4, wobei die Stanzungen (7.1) in Längsrichtung ausgerichtet sind.

6. Blechanordnung (2) nach einem der Ansprüche 1 bis 5, wobei sich die Stanzungen (7.1) über mindestens 80% einer gesamten Längserstreckung der Bleche erstrecken.

7. Blechanordnung (2) nach einem der Ansprüche 1 bis 6, wobei das Zwischenblech (7) zwischen 5 und 40 Stanzungen (7.1) aufweist.

8. Kraftfahrzeug (1) mit einer Blechbaugruppe (2), **dadurch gekennzeichnet, dass** die Baugruppe (2) nach einem der Ansprüche 1 bis 7 ausgebildet ist.

9. Verfahren zum Verbinden von Blechen (2) nach einem der Ansprüche 1 bis 7, wobei das Verfahren die folgenden Schritte umfasst:
- Aufbringen einer Klebekordel (4) auf das erste Blech (6);
- Inkontaktbringen des Zwischenblechs (7) mit dem ersten Blech (6), wobei die Stanzungen (7.1) und die Kleberschnur (4) fluchten;
- Anlage des Zwischenblechs (7) gegen das erste Blech (6) bis zum Abzug des Klebstoffs (4) aus den Stanzungen (7.1);
- Positionierung des zweiten Bleches (8) auf dem Zwischenblech (7) derart, dass der durch die Stanzungen (7.1) abgegebene Klebstoff (4) kontaktiert und ausgebreitet wird.

10. Verfahren nach Anspruch 9, das ferner den folgenden Schritt umfasst:
- Schweißen der Blechverbindung (2) mittels mindestens einer Schweißstelle (10) mittels elektrischen Widerstands an einem der beiden Enden (2.1) der Blechverbindung (2) entlang einer Längserstreckung der Blechverbindung (2), um eine metallurgische Verbindung zu gewährleisten.

## Claims

1. Assembly of metal sheets (2), in particular for a motor vehicle, comprising:
- a first sheet (6);
- a second sheet (8) superimposed on the first sheet (6);
an intermediate sheet (7) disposed between the first sheet (6) and the second sheet (8);
- glue (4) between the first sheet (6) and the intermediate sheet (7);
where the intermediate sheet (7) comprises punching operations (7. 1) through which the adhesive (4) extends between said intermediate sheet (7) and the second sheet (8), so as to ensure with said adhesive (4) a connection between said intermediate sheet (7) and each of said first (6) and second sheets (8),
and **characterised in that** the second sheet (8) is adapted so as to contact and extend the adhesive removed by the punching operations (7. 1).

2. Assembly of sheets (2) according to Claim 1, further comprising at least one electrical resistance weld point (10) providing a metallurgical connection between the intermediate sheet (7) and each of the first (6) and second sheets (8).

3. Assembly of sheets (2) according to one of Claims 1 and 2, in which the adhesive (4) corresponds to a single bead of adhesive (4) extending longitudinally over the first sheet (6), said bead (4) being aligned with the punches (7.1) of intermediate sheet (7).

4. Assembly of sheets (2) according to one of Claims 1 to 3, in which the adhesive (4) comprises a total quantity of not more than 3 cm3.

5. Assembly of sheets (2) according to one of Claims 1 to 4, in which the punches (7.1) are longitudinally aligned.

6. Assembly of sheets (2) according to one of Claims 1 to 5, in which the punching operations (7.1) extend over at least 80% of a total longitudinal extended of the sheets.

7. Assembly of sheets (2) according to one of Claims 1 to 6, in which the intermediate sheet (7) comprises between 5 and 40 punching operations (7.1).

8. Motor vehicle (1) comprising an assembly of metal sheets (2), **characterised in that** said assembly (2) is according to one of Claims 1 to 7.

9. Process for assembling sheets (2) according to one of Claims 1 to 7, said process comprising the following steps:
- applying a bead of glue (4) to the first sheet (6);
bringing the intermediate sheet (7) into contact with the first sheet (6), with an alignment of the punches (7.1) and the bead of adhesive (4);
pressing the intermediate sheet (7) against the first sheet (6) until the adhesive (4) is removed from the punches (7.1);
positioning of the second sheet (8) on the intermediate sheet (7) so as to contact and extend the adhesive (4) removed by the punches (7. 1).

10. Process according to Claim 9, further comprising the following step:
welding of the assembly of sheets (2) by means of at least one spot weld (10) by electrical resistance at one of two ends (2. 1) of the assembly of sheets (2) along a longitudinal extended of said assembly (2), so as to ensure a metallurgical connection.
